# EUROPÄISCHE PATENTSCHRIFT

(11) **EP 3 782 443 B1**
(45) Veröffentlichungstag und Bekanntmachung des Hinweises auf die Patenterteilung: **20.03.2024**
(21) Anmeldenummer: 20186154.9
(22) Anmeldetag: 16.07.2020
(51) Int. Cl.: A01B 73/04, A01B 63/00, A01B 63/16

(54) **LANDWIRTSCHAFTLICHE BODENBEARBEITUNGSMASCHINE ZUR BEARBEITUNG VON REIHENKULTUREN**
AGRICULTURAL SOIL WORKING MACHINE FOR WORKING ROW CROPS
MACHINE DE TRAITEMENT DU SOL AGRICOLE DESTINÉE AU TRAITEMENT DES CULTURES SUR RANG

(30) Priorität: 23.08.2019 DE 102019122712
(43) Veröffentlichungstag der Anmeldung: 24.02.2021
(73) Patentinhaber: Horsch Maschinen GmbH, 92421 Schwandorf (DE)
(72) Erfinder: HORSCH, Michael, 92421 Schwandorf (DE)
(74) Vertreter: Benninger, Johannes

(56) Entgegenhaltungen:
- EP-A1- 1 731 011
- EP-A1- 2 335 466
- EP-A1- 3 278 649
- EP-A2- 2 712 492
- DE-A1-102008 008 553
- FR-A- 1 578 619
- JP-A- 2009 095 311
- US-B1- 7 261 048

## Beschreibung

Die vorliegende Erfindung betrifft eine landwirtschaftliche Bodenbearbeitungsmaschine für den landwirtschaftlichen Einsatz bzw. zur Bearbeitung von landwirtschaftlichen Reihenkulturen.

Die Erfindung betrifft insbesondere eine an einem Trägerfahrzeug gelagerte oder montierbare Bodenbearbeitungsvorrichtung bspw. in Form einer Schareinheit mit oder ohne Tiefenführungsrolle und eine Ansteuerungsmöglichkeit zur Beeinflussung einer Schareinheit und/oder zu deren variabler Positionierung.

Zur mechanischen Unkrautbekämpfung auf landwirtschaftlichen Flächen sind aus dem Stand der Technik verschiedenste Bodenbearbeitungsmaschinen, insbesondere Hackgeräte bekannt. Eine derartige Bodenbearbeitungsmaschine geht beispielsweise aus der DE 36 16 403 A1 bereits hervor. Hierbei wird ein Hackgerät mit einem, aus einem Mittelrahmen und zwei Seitenrahmen zusammengesetzten, Maschinenbalken beschrieben, an welchem im Abstand zueinander Werkzeuge zur Reihenweisen Bearbeitung einer landwirtschaftlichen Fläche angebaut werden können. Um in der Transportstellung eine günstige Gesamtschwerpunktlage gegenüber einem landwirtschaftlichen Zugfahrzeug zu erreichen, ist vorgesehen, dass die Seitenrahmen zum Mittelrahmen in Fahrtrichtung versetzt angeordnet sind.

Um landwirtschaftliche Bodenbearbeitungsmaschinen wie etwa solche Hackgeräte variabel einsetzen zu können, sind Maschinen bekannt geworden, bei denen die Hackeinheiten nahezu beliebig quer zu einer Arbeitsrichtung verschoben werden können. Dies wird mittels eines Verschieberahmens mit mehreren Metern Arbeitsbreite erreicht, an dem unterschiedliche Werkzeuge angebaut werden können. Durch variable Montierbarkeit der Werkzeuge an dem Verschieberahmen können zudem unterschiedliche Reihenabstände abgedeckt werden.

Werden solche Verschieberahmen mit anderen Werkzeugen wie etwa Säscharen ausgestattet, so ist es sinnvoll, geeignete Maßnahmen zur Sicherstellung einer gewünschten Andruckkraft sowie dafür zu treffen, dass die Säschare bei unzulässig hohen Belastungen oder beim Auftreffen auf Hindernisse ausweichen können.

Hierfür bietet etwa die DE 1 731 011 B1 einen Werkzeugträger mit einer parallelogrammartigen Aufhängeeinrichtung, bei dem ein Bodenbearbeitungswerkzeug sowie eine Tiefenführungsrolle mittels Federkraft gegen den Boden gedrückt wird und bedarfsweise Hindernissen oder Widerständen im Boden ausweichen kann. EP 1 731 011 A1 und EP 2 712 492 A2 offenbaren weitere gattungsbildende Bodenbearbeitungsvorrichtungen.

Die bekannten Bodenbearbeitungsvorrichtungen sind jeweils für spezifische Einsatzbedingungen ausgelegt und weisen eine eingeschränkte Variabilität auf.

Ein vorrangiges Ziel der vorliegenden Erfindung ist es daher, zusätzliche Ausstattungsvarianten für bekannte Bodenbearbeitungsmaschinen zu schaffen, die zudem verschiedene Nachteile bekannter Werkzeugaufhängungen vermeiden.

Insbesondere liegt das Ziel der vorliegenden Erfindung darin, mit einfachen Mitteln eine Möglichkeit zu schaffen, bekannte Bodenbearbeitungsmaschinen noch flexibler einsetzen zu können und insbesondere mittels nur einem Schar bzw. Scharkörper sowohl eine Bodenbearbeitung (z.B. das Hacken) als auch eine Aussaat mittels solcher Maschinen durchführen zu können.

Zur Erreichung des identifizierten Ziels schlägt die Erfindung eine an einem Trägerfahrzeug gelagerte oder montierbare Bodenbearbeitungsvorrichtung für den landwirtschaftlichen Einsatz mit den Merkmalen des Anspruchs 1 vor. Vorteilhafte Ausgestaltungen und Weiterbildungen der Erfindung sind in den jeweils abhängigen Ansprüchen angegeben.

Die Bodenbearbeitungsvorrichtung umfasst zumindest einen am Trägerfahrzeug höhenverstellbar oder in definierter Höhe gelagerten Scharrahmen mit einem Hack- und/oder Säschar, welcher Scharrahmen eine Tiefenführungsrolle trägt, die an einer Halterung in definierter Höhe bezüglich des Hack- und/oder Säschars oder höhenverstellbar zu diesem gelagert ist. Die Tiefenführungsrolle kann zugleich auch als Andruckrolle und/oder Druckrolle bezeichnet werden.

Während das Hackschar zur reinen Bodenbearbeitung ohne Aussaat verwendet und somit insbesondere zur mechanischen Unkrautbekämpfung verwendet werden kann, kann ein Säschar auch zur Aussaat, insbesondere zur Verteilung landwirtschaftlicher Verteilgüter wie bspw. Saatgut, Dünger oder dergleichen verwendet werden. Der Scharrahmen kann jedoch auch derartig ausgeführt sein, dass an diesem verschiedene Schare, wie bspw. Hack- und Säschare angebaut werden können, um somit bspw. unterschiedliche Hackarbeiten durchführen zu können und/oder um verschiedene Verteilprozesse von landwirtschaftlichem Verteilgut durchführen zu können.

Bei der erfindungsgemäßen Bodenbearbeitungsvorrichtung erlaubt die Halterung eine Anordnung der Tiefenführungsrolle in Bezug auf eine Arbeitsrichtung des Trägerfahrzeugs und der Bodenbearbeitungsvorrichtung vor dem Hack- und/oder Säschar oder hinter dem Hack- und/oder Säschar.

Eine Montage bzw. Anordnung der Tiefenführungsrolle in Bezug auf die Arbeitsrichtung des Trägerfahrzeugs vor dem Hack- und/oder Säschar hat sich insbesondere in der mechanischen Unkrautbekämpfung als vorteilhaft erwiesen, sofern das Hack- und/oder Säschar lediglich als Hackschar ausgebildet ist. Bei solchen Bodenbearbeitungsvorgängen ist zum einen eine exakte Tiefenführung des Hackschars erforderlich. Zum anderen ist die Anordnung der Tiefenführungsrolle in Arbeitsrichtung des Trägerfahrzeugs vor dem Hackschar auch deshalb sinnvoll, damit die mittels des Hackschars entwurzelten Gräser und/oder Unkräuter oder dergleichen nicht wieder in die Erde gedrückt werden und somit wieder anwurzeln können. Stattdessen können die entwurzelten Gräser und/oder Unkräuter auf dem mittels des Hackschars gelockerten Boden oben aufliegen und dort anschließend vertrocknen.

Eine Montage bzw. Anordnung der Tiefenführungsrolle in Bezug auf die Arbeitsrichtung des Trägerfahrzeugs hinter dem Hack- und/oder Säschar hat sich insbesondere in der Aussaat von landwirtschaftlichem Verteilgut als vorteilhaft erwiesen, sofern das Hack- und/oder Säschar lediglich als Säschar ausgebildet ist. Bei dieser Ausführungsform kann die Tiefenführungsrolle insbesondere zur Definition und Einhaltung einer exakten, bzw. gewünschten Arbeitstiefe des Säschars und somit zur Definition und Einhaltung einer exakten Ablagetiefe von landwirtschaftlichem Verteilgut dienen. Um zudem einen guten Bodenschluss, welcher für ein gutes Wachstum des Verteilguts erforderlich ist, zu erhalten, kann das landwirtschaftliche Verteilgut mittels der Tiefenführungsrolle in den Ackerboden gedrückt werden, was entsprechend mit einer dem Säschar nachgeordneten Tiefenführungsrolle erreicht wird. Zur Ausbringung von Saatgut kann dem Säschar darüber hinaus eine Saatleitung zugeordnet sein, welche von einem Tank bzw. Vorratsbehälter mit Saatgut gespeist werden kann.

Bei der vorliegenden Bodenbearbeitungsvorrichtung kann der Scharrahmen mitsamt dem daran befestigten Hack- und/oder Säschar über eine beweglich am Trägerfahrzeug oder an einem dort angeordneten Zwischenträger gelagerte Viergelenk-Aufhängung mit mindestens zwei in etwa parallel angeordneten, in Bezug auf die Arbeitsrichtung des Trägerfahrzeuges und der Bodenbearbeitungsvorrichtung geschleppten Lenkern höhenbeweglich gelagert sein. Die Viergelenk-Aufhängung kann insbesondere in Form eines Parallelogramms ausgebildet sein, mittels welchem das Hack- und/oder Säschar schwenkbar und vorzugsweise höhenverstellbar am Scharrahmen des Trägerfahrzeugs angebaut ist. Aufgrund der Höhenverstellbarkeit kann die jeweilige Arbeitstiefe des Hack- und/oder Säschars variiert und eingestellt werden. Zur Höhenverstellbarkeit des Hack- und/oder Säschars umfasst dieses an seinem Stiel eine Vielzahl an zueinander beabstandeten Öffnungen, über welche Öffnungen eine Schraubverbindung zum Festsetzen des Hack- und/oder Säschars in einer definierten Höhe am Scharrahmen einsetzbar ist.

Weiter kann vorgesehen sein, dass die mindestens zwei geschleppten Lenker in einer Arbeitsposition der Bodenbearbeitungsvorrichtung einen Winkel zwischen etwa 10° und etwa 80° zu einer Horizontalen einschließen.

Gemäß einer bevorzugten Ausführungsform der Bodenbearbeitungsvorrichtung können die mindestens zwei geschleppten Lenker in einen oberen Lenker und in einen unteren Lenker unterteilt werden. Die Viergelenk-Aufhängung, insbesondere das Parallelogramm kann derartig ausgebildet sein, dass der obere Lenker und der untere Lenker in einer Arbeitsposition von vorne oben nach hinten unten, gegenüber einer Vorwärtsrichtung des Hack- und/oder Säschars bzw. des Trägerfahrzeugs orientiert sind.

Eine derartige Anordnung der mindestens zwei Lenker, insbesondere des oberen Lenkers und des unteren Lenkers, bringt den Vorteil mit sich, dass das Hack- und/oder Säschar bei einem Auftreffen auf einen Stein oder ein Hindernis oder dergleichen sowohl nach hinten als auch nach oben ausweichen kann, wohingegen Hack- und/oder Säschare an weitgehend waagerechten Lenkern weitestgehend nur nach oben ausweichen können oder wohingegen Hack- und/oder Säschare an weitgehend senkrechten Lenkern weitestgehend nur nach hinten ausweichen können.

Ein weiterer Vorteil der beschriebenen Anordnung der mindestens zwei Lenker besteht darin, dass die zur Vorspannung gegenüber einer Ackerfläche erforderlichen Kräfte verringert werden können, so dass bereits mit geringen Vorspannkräften ausreichend hohe Schardrücke bzw. Scharkräfte erreicht werden können. Dies bringt den Vorteil mit sich, dass die zur Erzeugung von Vorspannkräften benötigten Komponenten wesentliche geringere Anforderungen (z.B. an die Haltbarkeit) erfüllen müssen und wodurch zudem das Hack- und/oder Säschar bzw. der Scharrahmen an sich wesentlich einfacher aufgebaut werden kann.

Weiter kann vorgesehen sein, dass die Tiefenführungsrolle mittels Steckbolzen an der Halterung fixierbar und insbesondere werkzeuglos von dort entnehmbar und an dieser anbaubar ist. Aufgrund dessen kann die Tiefenführungsrolle schnell und ohne großen Aufwand gewechselt und/oder ausgetauscht werden. Darüber hinaus wären auch sämtliche weitere Befestigungsmethoden der Tiefenführungsrolle an der Halterung denkbar.

Darüber hinaus kann vorgesehen sein, dass die Tiefenführungsrolle in ihrer relativen Höhe zur Halterung und/oder zum Scharrahmen des Hack- und/oder Säschars justierbar und in dieser eingestellten Höhe festlegbar ist. Die Tiefenführungsrolle kann somit individuell an die jeweilige Bodenbearbeitungsvorgänge und/oder insbesondere an die jeweiligen Bodenbedingungen angepasst und/oder eingestellt werden, wodurch eine exakte Tiefenführung des Hack- und/oder Säschars ermöglicht wird. Auch kann es möglich sein, dass die Tiefenführungsrolle schnell und ohne großen Aufwand ummontiert werden kann, so dass diese bspw. die Tiefenführungsrolle in Bezug auf eine Arbeitsrichtung des Trägerfahrzeuges und der Bodenbearbeitungsvorrichtung vor dem Hack- und/oder Säschar oder hinter dem Hack- und/oder Säschar angebaut ist. Hierfür können bspw. an der Halterung der Tiefenführungsrolle verschiedene und insbesondere zueinander beabstandet Öffnungen vorgesehen sein, in welche zum Festsetzen der Tiefenführungsrolle in einer definierten Höhe an der Halterung eine Schraubverbindung einsetzbar ist.

Zur Erreichung des zuvor genannten Ziels schlägt die Erfindung weiter eine an einem Trägerfahrzeug gelagerte oder montierbare Bodenbearbeitungsvorrichtung für den landwirtschaftlichen Einsatz mit den Merkmalen des unabhängigen Anspruchs 6 vor.

Die Bodenbearbeitungsvorrichtung umfasst zumindest einen am Trägerfahrzeug höhenverstellbar oder in definierter Höhe befindlichen Aufhängungsrahmen, eine daran beweglich gelagerte Viergelenk-Aufhängung mit mindestens zwei in etwa parallel angeordneten, in Bezug auf eine Arbeitsrichtung des Trägerfahrzeuges und der Bodenbearbeitungsvorrichtung geschleppten Lenkern und einen an den Lenkern höhenbeweglich gelagerten Scharrahmen mit einem daran starr befestigtem Hack- und/oder Säschar, wobei die mindestens zwei geschleppten Lenker in einer Arbeitsposition der Bodenbearbeitungsvorrichtung einen Winkel zwischen etwa 10° und etwa 80° zu einer Horizontalen einschließen.

Bei der erfindungsgemäßen Bodenbearbeitungsvorrichtung ist weiterhin vorgesehen, dass zwischen mindestens einem der geschleppten Lenker und dem Aufhängungsrahmen ein steuerbarer Aktor zur Beaufschlagung des Lenkers mit einer variablen Vorspann- und/oder Rückstellkraft und/oder zur Winkelverstellung des Lenkers gegenüber dem Aufhängungsrahmen und damit zur Höhenverstellung des Scharrahmens angeordnet ist.

Dabei kann vorgesehen sein, dass der steuerbare Aktor durch einen mit einstellbarem oder regelbarem fluidischen Druck arbeitenden Stellzylinder, insbesondere durch einen einfachwirkenden oder doppeltwirkenden Hydraulikzylinder oder Pneumatikzylinder gebildet ist. Alternativ kann der steuerbare Aktor auch durch zwei in entgegengesetzte Richtungen arbeitende einfachwirkende Hydraulikzylinder oder Pneumatikzylinder ausgebildet sein.

Gemäß einer bevorzugten Ausführungsform kann vorgesehen sein, dass der Hydraulik- oder Pneumatikzylinder zumindest eine mit variablem Druck beaufschlagbare Kammer aufweist, insbesondere zur Erzeugung einer variablen Vorspannkraft.

Zudem kann vorgesehen sein, dass der Hydraulik- oder Pneumatikzylinder zwei mit variablen Drücken beaufschlagbare Kammern aufweist, welche jeweils unterschiedlich ansteuerbar sind, insbesondere zur Erzeugung einer variablen Vorspannkraft und zum Ausheben der Schare. Somit kann das Hack- und/oder Säschar beliebig in seiner Arbeitstiefe hinsichtlich den jeweils herrschenden Bodenbedingungen und Bearbeitungs- und/oder Ausbringtiefe und in seiner Aushubbewegung eingestellt werden.

Bei dieser bevorzugten Ausführungsform kann weiter vorgesehen sein, dass wenigstens zwei Schare bzw. Zylinder mittels eines Ventils mit ungefähr gleichen Druckwerten beaufschlagbar sind. Insbesondere kann vorgesehen sein, dass das Ventil ein Bestandteil eines Ventils des Zylinders ist bzw. dass das Ventil in den Zylinder integriert ist. D.h. das Ventil und der Zylinder können ein gemeinsames Gehäuse umfassen.

Es kann somit festgehalten werden, dass das Hack- und/oder Säschar mittels des Aktors zwischen zwei Positionen bewegbar ist bzw. bewegt werden kann. Der Aktor kann insbesondere derart ausgebildet sein, um das Hack- und/oder Säschar in eine ausgehobene Transportstellung zu bewegen. Der Aktor sollte jedoch derartig ausgeführt sein, dass mittels diesem das Hack- und/oder Säschar mit einer definierten und/oder definierbaren Kraft gegen eine Ackerfläche gedrückt und/oder mit einem sog. definierten und/oder definierbaren Schardruck entlang einer Ackerfläche geführt werden kann.

Bei der Verwendung von einem einfachwirkenden Zylinder kann das Ausheben der Schare bei Auftreffen auf ein Hindernis, einen Stein oder dergleichen auch mittels einer entsprechenden Federung, insbesondere mittels Druckfedern erreicht werden.

Gemäß einer alternativen Ausführungsform kann vorgesehen sein, dass der steuerbare Aktor durch einen steuer- oder regelbaren elektrischen Linearmotor gebildet ist.

Bei der erfindungsgemäßen Bodenbearbeitungsvorrichtung kann weiterhin vorgesehen sein, dass die Viergelenk-Aufhängung mit dem an den wenigstens zwei Lenkern höhenbeweglich gelagerten Scharrahmen durch eine Parallelogramm-Aufhängung gebildet ist, bei der ein oberer und ein unterer Lenker in etwa parallel zueinander angeordnet sind und in etwa gleiche Längen zwischen ihren Gelenkachsen aufweisen.

Gemäß einer bevorzugten Ausführungsform der Bodenbearbeitungsvorrichtung können die mindestens zwei geschleppten Lenker in einen oberen Lenker und in einen unteren Lenker unterteilt werden. Die Viergelenk-Aufhängung, insbesondere das Parallelogramm kann derartig ausgebildet sein, dass der obere Lenker und der untere Lenker in einer Arbeitsposition von vorne oben nach hinten unten, gegenüber einer Vorwärtsrichtung des Hack- und/oder Säschar bzw. des Trägerfahrzeugs orientiert sind.

Eine derartige Anordnung der mindestens zwei Lenker, insbesondere des oberen Lenkers und des unteren Lenkers, bringt den Vorteil mit sich, dass das Hack- und/oder Säschar bei einem Auftreffen auf einen Stein oder ein Hindernis oder dergleichen sowohl nach hinten als auch nach oben ausweichen kann, wohingegen Hack- und/oder Säschare an weitgehend waagerechten Lenker weitestgehend nur nach oben ausweichen können oder wohingegen Hack- und/oder Säschare an weitgehend senkrechten Lenkern weitestgehend nur nach hinten ausweichen können.

Ein weiterer Vorteil der beschriebenen Anordnung der mindestens zwei Lenker besteht darin, dass die zur Vorspannung gegenüber einer Ackerfläche erforderlichen Kräfte verringert werden können, so dass bereits mit geringen Vorspannkräften ausreichend hohe Schardrücke bzw. Scharkräfte erreicht werden können. Dies bringt den Vorteil mit sich, dass die zur Erzeugung von Vorspannkräften benötigten Komponenten wesentlich geringere Anforderungen (z.B. an die Haltbarkeit) erfüllen müssen und wodurch zudem das Hack- und/oder Säschar bzw. der Scharrahmen an sich wesentlich einfacher aufgebaut werden kann.

Weiterhin kann vorgesehen sein, dass der steuerbare Aktor zur Steuerung oder Regelung eines Schardrucks bei im Eingriff mit einem zu bearbeitenden Ackerboden befindlichem Hack- und/oder Säschar und/oder zum Anheben des Scharrahmens einsetzbar ist, um das Hack- und/oder Säschar aus dem Eingriff mit dem Ackerboden zu bringen.

Zudem kann vorgesehen sein, dass das Hack- und/oder Säschar auswechselbar am Scharrahmen befestigt ist. Die Befestigung des Hack- und/oder Säschars am Scharrahmen kann bspw. kraftschlüssig, insbesondere mittels Schraubverbindungen, oder dergleichen erfolgen. Auf diese Weise kann gewährleistet werden, dass das Hack- und/oder Säschar bei Verschleiß und/oder bei Wartung und/oder beim Umrüsten der Maschine schnell und ohne großen Aufwand gewechselt, demontiert und/oder ausgetauscht werden kann. D.h. mittels des steuerbaren Aktors kann das Hack- und/oder Säschar zwischen zwei Positionen bewegt werden. Insbesondere kann das Hack- und/oder Säschar zwischen einer Arbeitsstellung und einer Transportstellung, insbesondere in einer gegenüber der Ackerfläche aus- bzw. angehobene Position, bewegt bzw. verschwenkt werden.

Zur Steuerung des Aktors, insbesondere der Vielzahl an Aktoren, kann eine Steuereinrichtung vorgesehen sein. Zur Erfassung des jeweiligen Schardrucks, kann diese bspw. mit einer entsprechenden Drucksensorik ausgestattet sein. Auch wäre es möglich, dass an zumindest einem Hack- und/oder Säschar eine Sensorik zur Erfassung einer auf das Hack- und/oder Säschar und/oder die Tiefenführungsrolle wirkenden Kraft angebracht ist. Zudem kann vorgesehen sein, dass eine Ansteuerung, insbesondere Schardruckregelung in Abhängigkeit einer ermittelten Kraft automatisiert geregelt und/oder gesteuert wird. Zweckmäßig kann hierbei vorgesehen sein, dass eine Bedienperson lediglich einen Sollwert und/oder eine Solltiefe definieren muss und anschließend die Reglung automatisiert erfolgt.

Weiterhin kann vorgesehen sein, dass die beweglich am Aufhängungsrahmen des Trägerfahrzeugs gelagerte Viergelenk-Aufhängung mit den geschleppten Lenkern und dem an den Lenkern höhenbeweglich gelagerten Scharrahmen mit daran befestigter Hack- und/oder Säschar quer zu einer Arbeitsrichtung des Trägerfahrzeuges und/oder quer zu einer Mittellängsachse des Trägerfahrzeuges oder der Bodenbearbeitungsvorrichtung in horizontaler Richtung verstellbar ist. Aufgrund der horizontalen Verstellbarkeit der Viergelenk-Aufhängung am Aufhängungsrahmen kann die Bodenbearbeitungsmaschine individuell an die jeweiligen Umgebungs- und/oder Ausbringbedingungen bzw. -anforderungen angepasst und/oder eingestellt werden.

Weiterhin kann vorgesehen sein, dass zwischen dem am Trägerfahrzeug befestigten Aufhängungsrahmen und der Viergelenk-Aufhängung ein Schienensystem angeordnet ist, mit deren Hilfe die Viergelenk-Aufhängung mit dem daran gelagerten Scharrahmen quer zur Arbeitsrichtung des Trägerfahrzeuges verschiebbar ist. Insbesondere kann die Viergelenk-Aufhängung an verschiedenen Positionen am Schienensystem montierbar sein, insbesondere entlang der Längserstreckungsrichtung des Schienensystems und/oder quer zur Arbeitsrichtung des Trägerfahrzeuges.

Das Schienensystem kann insbesondere aus einem Schieberrahmen und einem Führungsrahmen zusammengesetzt sein. Die Viergelenk-Aufhängungen der Hack- und/oder Säschare könnend dabei insbesondere am Schieberrahmen montiert und/oder befestigt sein. Das Verschieben des Schieberrahmens gegenüber dem Führungsrahmen kann mittels zumindest eines Aktors, bspw. in Form eines Hydraulik- und/oder Pneumatikzylinders, erfolgen.

Das Schienensystem hat sich insbesondere dahingehend als vorteilhaft erwiesen, dass die Hack- und/oder Säschare jeweils in eine für die jeweilige mittels der Hack- und/oder Säschare durchzuführende Arbeit benötigte Position verschoben werden können. Beispielsweise kann so ein Hackschar zur mechanischen Unkrautbekämpfung in eine Position zwischen zwei Saatreihen verschoben sein/werden. Darüber hinaus kann es durch das Schienensystem auch ermöglicht werden, dass die Säschare für die Aussaat von landwirtschaftlichen Verteilgütern in eine für die Aussaat gewünschte Position gebracht und/oder verschoben werden können.

Somit kann bspw. erfindungsgemäß vorgesehen sein, dass mittels des Schienensystems die Hack- und/oder Säschare in eine mittelsymmetrische Position verschiebbar sind bzw. verschoben werden können, bspw. um somit die Schare bzw. Säschare in eine für eine Aussaat erforderliche Position, insbesondere in eine gegenüber den Laufrädern eines Trägerfahrzeugs mittelsymmetrische Position, zu bringen.

Selbstverständlich wäre es auch denkbar, dass eine mittelsymmetrische Position der Hack- und/oder Säschare zwischen zwei Saatreihen einstellbar und/oder definierbar ist, wie es insbesondere bei der mechanischen Unkrautbekämpfung der Fall ist. Sofern folglich mittels der Hack- und/oder Säschare eine Aussaat von landwirtschaftlichen Verteilgütern erfolgen soll, so kann es bei dieser Ausführungsform erforderlich sein, diese mittels des Schienensystems in eine für die Aussaat gewünschte Position zu verschieben.

Weiterhin kann vorgesehen sein, dass die Hack- und/oder Säschare mittels des Schienensystems in eine sog. Offset-Position verschiebbar sind bzw. verschoben werden können, d.h. die Hack- und/oder Säschare können bspw. um einen halben Strichabstand nach links oder rechts gegenüber einer mittelsymmetrischen Position verschoben werden. Der Offset kann somit derartig gewählt sein, dass Hack- und/oder Säschare in Abhängigkeit des Offsets im Wesentlichen exakt zwischen zwei Saatreichen bewegbar sind bzw. bewegt werden können.

Darüber hinaus kann es zudem denkbar sein, dass mittels des Schienensystems der jeweilige Offset und/oder mittelsymmetrische Position in Abhängigkeit der Arbeitsrichtung bzw. Fahrtrichtung geändert werden kann bzw. veränderbar ist, so dass bspw. ein nahtloses Anschlussfahren erreicht werden kann. D.h., dass bspw. in eine Fahrrichtung ein linker Offset-Wert angefahren wird und in die entgegengesetzte Fahrrichtung ein rechter Offset-Wert angefahren wird.

Um variable Strichabstände zu erreichen, kann erfindungsgemäß insbesondere vorgesehen sein, dass eine Verbindung zwischen dem Hack- und/oder Säschar und dem Aufhängungsrahmen, insbesondere dem Schienensystem, der Bodenbearbeitungsvorrichtung mittels eines Klemmsystems erfolgt, so dass das Hack- und/oder Säschar an nahezu beliebigen Positionen an einem Rahmen der landwirtschaftlichen Maschine montierbar ist. Auch andere Befestigungsarten wären jedoch denkbar bzw. einsetzbar.

Weiter kann vorgesehen sein, dass der Scharrahmen eine Andruck- und/oder Tiefenführungsrolle trägt, die an einer Halterung in definierter Höhe bezüglich des Hack- und/oder Säschars oder höhenverstellbar zu diesem gelagert ist, welche Halterung eine Anordnung der Tiefenführungsrolle in Bezug auf die Arbeitsrichtung des Trägerfahrzeuges und der Bodenbearbeitungsvorrichtung vor dem Hack- und/oder Säschar oder hinter dem Hack- und/oder Säschar erlaubt. Insbesondere kann die Andruck- und/oder Tiefenführungsrolle gemäß Anspruch 4 an der Halterung fixierbar und/oder gemäß Anspruch 5 justierbar und festlegbar sein.

Zur Erreichung des genannten Ziels schlägt die Erfindung zudem eine landwirtschaftliche Bodenbearbeitungsmaschine zur insbesondere höhenverstellbaren Montage an einem Trägerfahrzeug vor, welche Bodenbearbeitungsmaschine mindestens zwei voneinander beabstandete Bodenbearbeitungsvorrichtungen gemäß einem der Ansprüche 1 bis 21 aufweist, die unmittelbar am Aufhängungsrahmen oder gemeinsam an einem gegenüber dem Aufhängungsrahmen quer zur Arbeitsrichtung des Trägerfahrzeuges verschiebbaren Schienensystem befestigt sind.

Hierbei kann insbesondere vorgesehen sein, dass die mindestens zwei Bodenbearbeitungsvorrichtungen jeweils an verschiedenen Positionen am quer zur Arbeitsrichtung des Trägerfahrzeuges verstellbaren Schienensystem montierbar sind, insbesondere entlang der Längserstreckungsrichtung des Schienensystems und/oder quer zur Arbeitsrichtung des Trägerfahrzeuges.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt in einer schematischen Perspektivansicht eine Bodenbearbeitungsmaschine mit erfindungsgemäßen Bodenbearbeitungsvorrichtungen.
Figuren 2A und 2B zeigen in verschiedenen Ansichten und Perspektiven die in Figur 1 gezeigten Bodenbearbeitungsvorrichtungen.
Figur 3 zeigt in einer schematischen Seitenansicht eine weitere Ausführungsform der erfindungsgemäßen Bodenbearbeitungsvorrichtungen.
Figur 4 zeigt eine Ausführungsform eines Hydraulikschaltplans zur Ansteuerung eines Aktors zur Verschwenkung des Hack- und/oder Säschars.
Figur 5 zeigt eine weitere Ausführungsform eines Hydraulikschaltplans zur Ansteuerung eines Aktors zur Verschwenkung des Hack- und/oder Säschars.
Figur 6 zeigt eine weitere Ausführungsform eines Hydraulikschaltplans zur Ansteuerung eines Aktors zur Verschwenkung des Hack- und/oder Säschars.
Figur 7A, 7B und 7B zeigen verschiedene einstellbare Stellungen und/oder Positionen der Bodenbearbeitungsvorrichtungen gegenüber der landwirtschaftlichen Bodenbearbeitungsmaschine.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die landwirtschaftliche Bodenbearbeitungsmaschine ausgestaltet sein kann und stellen keine abschließende Begrenzung dar.

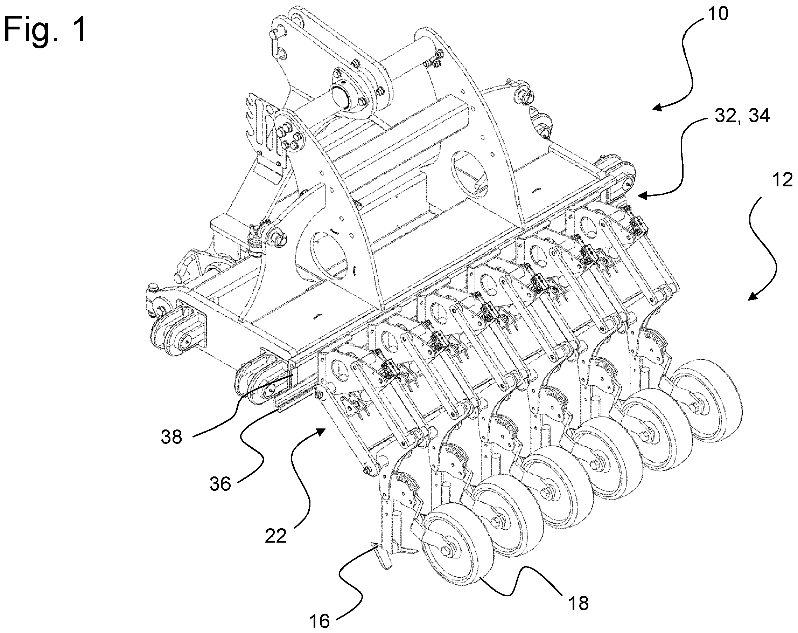

Die Figur 1 zeigt eine landwirtschaftliche Bodenbearbeitungsmaschine 10 (kann auch als Trägerfahrzeug bezeichnet werden), welche an einem hier nicht dargestellten Zugfahrzeug bspw. in Form eines Traktors gelagert ist. Die landwirtschaftliche Bodenbearbeitungsmaschine 10 umfasst vorderseitig entsprechende Vorrichtungen, um heckseitig an einer Dreipunkt-Aufhängung des Zugfahrzeugs gekoppelt werden zu können. Die Bodenbearbeitungsmaschine 10 umfasst eine Vielzahl von Bodenbearbeitungsvorrichtungen 12, welcher quer zur Arbeitsrichtung des Trägerfahrzeugs bzw. der Bodenbearbeitungsmaschine 10 angeordnet sind.

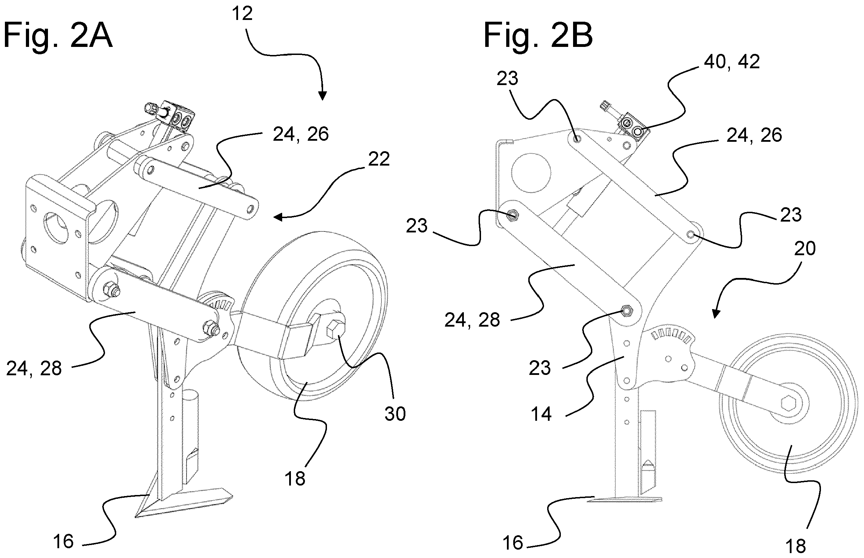

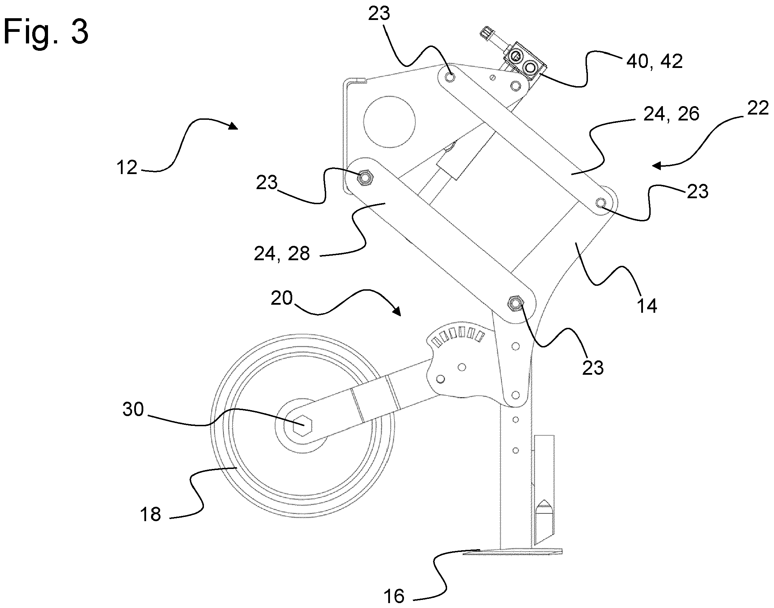

In den Figuren 2A, 2B sowie 3 sind verschiedene Ausführungsformen der Bodenbearbeitungsvorrichtungen 12 gezeigt, wobei aus Gründen der Übersichtlichkeit nur eine Bodenbearbeitungsvorrichtung 12 abgebildet ist.

Die in den Figuren 2 und 3 gezeigte Bodenbearbeitungsvorrichtung 12 umfasst jeweils zumindest einen am Trägerfahrzeug (hier Bodenbearbeitungsmaschine 10) höhenverstellbar oder in definierter Höhe gelagerten Scharrahmen 14. Dem Scharrahmen 14 ist ein Hack- und/oder Säschar 16 zugeordnet, welcher Scharrahmen 14 eine Tiefenführungsrolle 18 trägt, die an einer Halterung 20 in definierter Höhe bezüglich des Hack- und/oder Säschars 16 oder höhenverstellbar zu diesem gelagert ist. Insbesondere ist dem Scharrahmen 14 das Hack- und/oder Säschar 16 fest, bspw. kraftschlüssig zugeordnet. In den gezeigten Figuren ist das Hack- und/oder Säschar 16 mittels einer Schraubverbindung am Scharrahmen 14 montiert.

Die Tiefenführungsrolle 18 ist über die Halterung 20 in Bezug auf eine Arbeitsrichtung des Trägerfahrzeugs 10 und der Bodenbearbeitungsvorrichtung 12 vor dem Hack- und/oder Säschar 16 (vgl. Figur 3) oder hinter dem Hack- und/oder Säschar 16 (vgl. Figuren 2) anordenbar. Die Halterung 20 ist ebenfalls am Scharrahmen 20 mittels einer kraftschlüssigen Verbindung gekoppelt.

Gemäß den Figuren 2A und 2B ist die Tiefenführungsrolle 18 über die Halterung 20 in Arbeitsrichtung der Bodenbearbeitungsmaschine 10 hinter dem Säschar 16 angeordnet. Eine solche Ausführungsform der Bodenbearbeitungsvorrichtung 12 eignet sich insbesondere zur Aussaat von landwirtschaftlichen Verteilgütern, wie Saatgut, Dünger oder dergleichen. Bei der vorliegenden Ausführungsform dient die Tiefenführungsrolle 18 insbesondere zur Definition und Einhaltung einer exakten, bzw. gewünschten Arbeitstiefe des Säschars 16 und zur Definition und Einhaltung einer exakten Ablagetiefe von landwirtschaftlichem Verteilgut. Um zudem einen guten Bodenschluss, welcher für ein gutes Wachstum des Verteilguts erforderlich ist, zu erhalten, kann das landwirtschaftliche Verteilgut mittels der dem Säschar 16 nachgeordneten Tiefenführungsrolle 18 in den Ackerboden gedrückt werden. Um das Saatgut mittels des Säschars 16 ausbringen zu können, ist diesem eine hier nicht dargestellte Saatleitung zugeordnet, die von einem Tank mit Saatgut gespeist werden kann.

Gemäß der Figur 3 ist die Tiefenführungsrolle 18 über die Halterung 20 in Arbeitsrichtung der Bodenbearbeitungsmaschine 10 vor dem Hackschar 16 angeordnet. Eine solche Ausführungsform der Bodenbearbeitungsvorrichtung 12 eignet sich insbesondere zur mechanischen Unkrautbekämpfung. Bei der mechanischen Unkrautbekämpfung ist es wichtig, dass die mittels des Hackschars 16 entwurzelten Gräser oder Unkräuter oder dergleichen auf dem gelockerten Boden oben aufliegen, so dass sie dort vertrocknen können. Dies kann durch eine dem Hackschar 16 vorgeordnete Tiefenführungsrolle 18 erreicht werden.

Bei beiden Ausführungsformen gemäß den Figuren 2 und 3 wird insbesondere auch die Aufhängung des Scharrahmens 14 mit dem daran vorgesehenen Hack- und/oder Säschar 16 an der Bodenbearbeitungsmaschine 10 oder an einem dort angeordneten Zwischenträger deutlich. Der Scharrahmen 14 ist mitsamt dem jeweils daran befestigten Hack- und/oder Säschar 16 über eine beweglich am Trägerfahrzeug bzw. an der Bodenbearbeitungsmaschine 10 oder an einem dort angeordneten Zwischenträger gelagerte Viergelenk-Aufhängung 22 mit mindestens zwei in etwa parallel angeordneten, in Bezug auf die Arbeitsrichtung des Trägerfahrzeuges und der Bodenbearbeitungsvorrichtung 12 geschleppten Lenkern 24 höhenbeweglich gelagert. Die Viergelenk-Aufhängung 22 kann insbesondere in Form eines Parallelogramms ausgebildet sein, mittels welchem das Hack- und/oder Säschar 16 schwenkbar und vorzugsweise höhenverstellbar am Scharrahmen 14 des Trägerfahrzeugs angebaut ist.

Darüber hinaus ist das Hack- und/oder Säschar 16 selbst gegenüber dem Scharrahmen 14 höhenverstellbar. Hierfür umfasst der Stiel 17 des Hack- und/oder Säschars 16 eine Vielzahl an beabstandet zueinander angeordnete Öffnungen, in welche zum Festsetzen des Hack- und/oder Säschars 16 am Scharrahmen 14 eine Schraubverbindung einsetzbar ist.

Dabei schließen die zwei geschleppten Lenker 24 in einer Arbeitsposition der Bodenbearbeitungsvorrichtung 12 einen Winkel zwischen etwa 10° und etwa 80° zu einer Horizontalen ein. Die zwei geschleppten Lenker 24 können auch in einen oberen Lenker 26 und in einen unteren Lenker 28 eingeteilt werden, wobei der obere Lenker 26 und der untere Lenker 28 parallel zueinander angeordnet sind. Darüber hinaus weisen der obere Lenker 26 und der untere Lenker 28 zwischen ihren Gelenkachsen 23 eine gleiche Länge auf.

Die geneigte Anordnung der zwei geschleppten Lenker 24 gegenüber der Horizontalen bewirkt zudem, dass der obere Lenker 26 und der untere Lenker 28 in einer Arbeitsposition von vorne oben nach hinten unten, gegenüber einer Vorwärtsrichtung des Hack- und/oder Säschar 16 orientiert sind. Auf diese Weise kann das Hack- und/oder Säschar 16 bei einem Auftreffen auf einen Stein oder ein Hindernis oder dergleichen vorteilhafterweise sowohl nach hinten als auch nach oben ausweichen.

Aus den Figuren 2 und 3 wird zudem auch deutlich, dass die Tiefenführungsrolle 18 mittels Steckbolzen 30 an der Halterung 20 fixierbar und insbesondere werkzeuglos von dort entnehmbar und an dieser anbaubar ist, so dass die Tiefenführungsrolle 18 schnell und ohne großen Aufwand bei Wartung, Verschleiß oder bei Umbaumaßnahmen der Bodenbearbeitungsvorrichtung 12 ausgetauscht werden kann. Darüber hinaus ist die Tiefenführungsrolle 18 in ihrer relativen Höhe zur Halterung 20 und/oder zum Scharrahmen 14 des Hack- und/oder Säschars 16 justierbar und in dieser eingestellten Höhe festlegbar.

Die Bodenbearbeitungsmaschine 10 umfasst einen Aufhängungsrahmen 32, an welchem die Viergelenk-Aufhängung 22 beweglich gelagert ist. Insbesondere ist die beweglich am Aufhängungsrahmen 32 der Bodenbearbeitungsmaschine 10 gelagerte Viergelenk-Aufhängung 22 mit den geschleppten Lenkern 24 und dem an den Lenkern 24 höhenbeweglich gelagerten Scharrahmen 14 mit daran befestigter Hack- und/oder Säschar 16 quer zu einer Arbeitsrichtung der Bodenbearbeitungsmaschine 10 und/oder quer zu einer Mittellängsachse der Bodenbearbeitungsmaschine 10 oder der Bodenbearbeitungsvorrichtung 12 in horizontaler Richtung verstellbar.

Aus Figur 1 wird insbesondere deutlich, dass zwischen dem an der Bodenbearbeitungsmaschine 10 befestigten Aufhängungsrahmen 32 und der Viergelenk-Aufhängung 22 ein Schienensystem 34 angeordnet ist, mit deren Hilfe die Viergelenk-Aufhängung 22 mit dem daran gelagerten Scharrahmen 14 quer zur Arbeitsrichtung der Bodenbearbeitungsmaschine 10 verschiebbar ist. Insbesondere kann die Viergelenk-Aufhängung 22 an verschiedenen Positionen am Schienensystem 34 montiert sein, insbesondere entlang der Längserstreckungsrichtung des Schienensystems 34 und/oder quer zur Arbeitsrichtung der Bodenbearbeitungsmaschine 10. Das in Figur 1 gezeigte Schienensystem 34 umfasst einen Schieberrahmen 36 und einen Führungsrahmen 38, wobei die Viergelenk-Aufhängungen 22 der Hack- und/oder Säschare 16 insbesondere am Schieberrahmen 36 montiert sind.

Das Verschieben des Schieberrahmens 36 gegenüber dem Führungsrahmen 38 kann mittels eines hier nicht dargestellten Aktors, bspw. in Form eines Hydraulik- und/oder Pneumatikzylinders erfolgen. Dies kann bspw. während oder vor einer Feldfahrt erfolgen.

Das Schienensystem 34 hat sich insbesondere dahingehend als vorteilhaft erwiesen, indem die Hack- und/oder Säschare 16 jeweils in eine für die jeweilige mittels der Hack- und/oder Säschare 16 durchzuführende Arbeit benötigte Position verschoben werden können. Beispielsweise kann mittels des Schienensystems 34 ein Hackschar 16 zur mechanischen Unkrautbekämpfung in eine Position zwischen zwei Saatreihen 58 verschoben sein/werden. Darüber hinaus kann es durch das Schienensystem 34 ermöglicht werden, dass die Säschare 16 für die Aussaat von landwirtschaftlichen Verteilgütern in eine für die Aussaat gewünschte Position gebracht und/oder verschoben werden können.

Um das Hack- und/oder Säschar 16 jeweils zwischen zwei Positionen bewegen zu können, ist zwischen mindestens einem der geschleppten Lenker 24 und dem Aufhängungsrahmen 32 ein steuerbarer Aktor 40 zur Beaufschlagung des Lenkers 24 mit einer variablen Vorspann- und/oder Rückstellkraft und/oder zur Winkelverstellung des Lenkers gegenüber dem Aufhängungsrahmen 32 und damit zur Höhenverstellung des Scharrahmens 14 angeordnet. D.h. der Aktor 40 ist derart ausgebildet, um das Hack- und/oder Säschar 16 in eine ausgehobene Transportstellung zu bewegen. Der Aktor 40 sollte jedoch derartig ausgeführt sein, dass mittels diesem das Hack- und/oder Säschar mit einer definierten und/oder definierbaren Kraft gegen eine Ackerfläche gedrückt und/oder mit einem sog. definierten und/oder definierbaren Schardruck entlang einer Ackerfläche geführt werden kann.

Der Aktor 40 kann je nach Ausführungsform verschiedenartig ausgebildet sein. In den vorliegenden Figuren 1 bis 3 ist der Aktor 40 als doppeltwirkender Hydraulikzylinder 42 ausgebildet. Der Hydraulikzylinder 42 weist zumindest eine mit variablem Druck beaufschlagbare Kammer auf, insbesondere zur Erzeugung einer variablen Vorspannkraft. Insbesondere weist der Hydraulikzylinder 42 zwei mit variablen Drücken beaufschlagbare Kammern auf, welche jeweils unterschiedlich ansteuerbar sind, insbesondere zur Erzeugung einer variablen Vorspannkraft und zum Ausheben der Hack- und/oder Säschare 16. Somit kann das Hack- und/oder Säschar 16 beliebig in seiner Arbeitstiefe hinsichtlich den jeweils herrschenden Bodenbedingungen und Bearbeitungs- und/oder Ausbringtiefe und in seiner Aushubbewegung eingestellt werden.

Bei der Bodenbearbeitungsmaschine 10 ist es denkbar, dass wenigstens zwei Hack- und/oder Säschare 16 mittels eines Ventils V mit ungefähr gleichen Druckwerten beaufschlagbar sind. Insbesondere kann vorgesehen sein, dass das Ventil V ein Bestandteil eines Ventils des Hydraulikzylinders 42 ist bzw. dass das Ventil V in den Hydraulikzylinder 42 integriert ist. D.h. das Ventil V und der Hydraulikzylinder 42 können ein gemeinsames Gehäuse umfassen.

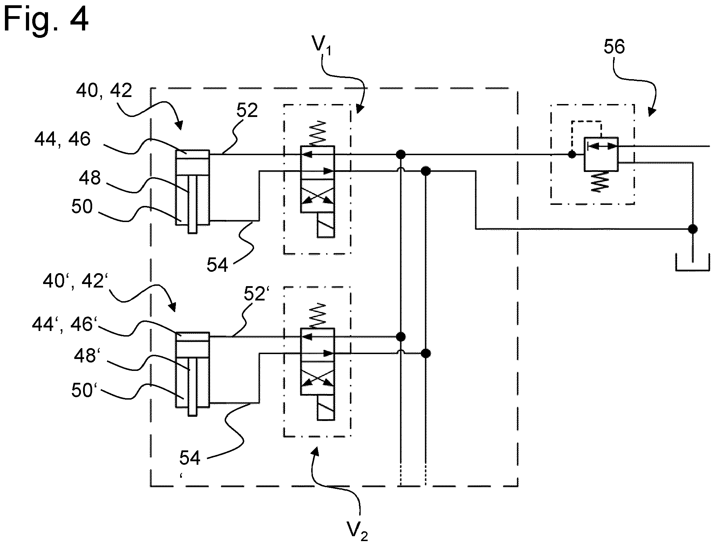

In der Figur 4 ist ein Hydraulikschaltplan zur Ansteuerung der Aktoren 40, 40`, insbesondere der Hydraulikzylinder 42, 42` dargestellt, wobei zur Steuerung der Aktoren 40, 40` eine hier nicht dargestellte Steuereinrichtung vorgesehen ist. Wie es die Figur 4 erkennen lässt, sind aus Gründen der Übersichtlichkeit nur zwei Hydraulikzylinder 42, 42` dargestellt. In der Praxis sind jedoch entsprechend der Anzahl an Hack- und/oder Säschare 14 mehrere bzw. eine Vielzahl an Hydraulikzylindern 42, 42` vorgesehen.

Gemäß Figur 4 umfassen beide Hydraulikzylinder 42, 42` jeweils eine Kolbenseite 44, 44` mit einem Kolbenraum 46, 46`, eine Kolbenstange 48, 48` sowie eine Ringseite 50, 50`. Während an die Kolbenseite 44, 44` jeweils eine erste Druckleitung 52, 52` anschließt, schließt sich an die Ringseite 50, 50` eine zweite Druckleitung 54, 54` an.

Die Kolbenseiten 44, 44` der beiden Hydraulikzylinder 42, 42` sind jeweils über eine erste Druckleitung 52, 52` mit einem gemeinsamen Druckregelventil 56 verbunden. Aufgrund der gezeigten Verschaltung mit dem Druckregelventil 56 ist die mittels des Hydraulikzylinders 42 auf das Hack- und/oder Säschar 16 erzeugbare Kraft begrenzbar bzw. regelbar. Neben dem Druckregelventil 56 wären auch verschiedene weitere Druckbegrenzungsventile oder dergleichen Mittel denkbar. Mittels des Druckregelventils 56 ist es möglich, den Druck und damit auch den Schardruck jeweils in Abhängigkeit der Zylindergröße auf einen definierten Wert gesteuert und/oder geregelt werden. Bspw. kann der Druck hierbei auf einen Wert zwischen 5 Bar und 20 Bar gesteuert und/oder geregelt werden. Auch eine Ausführungsvariante mit einer manuellen Einstellung durch eine Bedienperson wäre denkbar bzw. einsetzbar.

Darüber hinaus ist jedem Hydraulikzylinder 42, 42` ein Ventil V₁, V₂ zugeordnet, wobei es sich bei dem Ventil um ein "Zwei-Durchflusswege-Ventil" handelt. Die Hydraulikzylinder 42, 42` sind jeweils über die erste Druckleitung 52, 52` und die zweite Druckleitung 54, 54` mit dem Ventil V₁, V₂ verbunden. Da jeder Hydraulikzylinder 42, 42` mit einem separaten Ventil V₁, V₂ verschaltet ist, ist jeder Hydraulikzylinder 42, 42` und damit jedes Hack- und/oder Säschar 16 unabhängig voneinander ansteuerbar und somit zwischen einer ausgehobenen und einer abgesenkten Position verschwenkbar bzw. bewegbar.

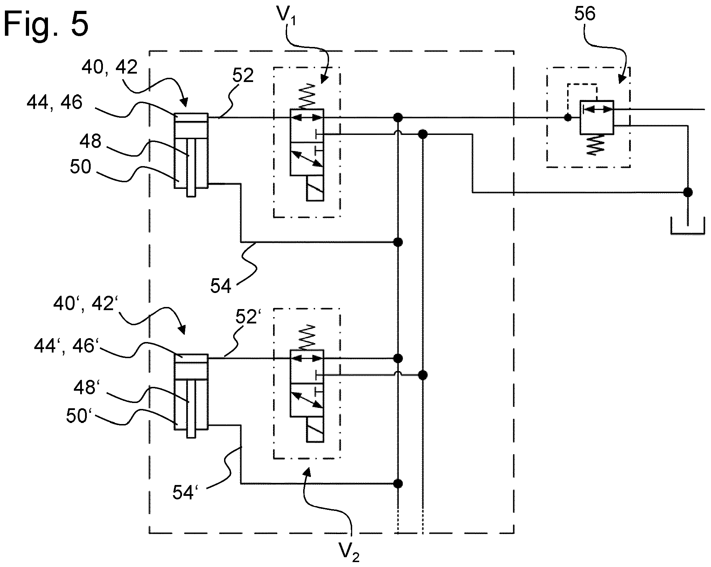

In der Figur 5 ist eine weitere Ausführungsform eines Hydraulikschaltplans zur Ansteuerung der Aktoren 40, 40`, insbesondere der Hydraulikzylinder 42, 42` dargestellt, wobei zur Steuerung der Aktoren 40, 40` eine hier nicht dargestellte Steuereinrichtung vorgesehen ist. Auch hier sind aus Gründen der Übersichtlichkeit nur zwei Hydraulikzylinder 42, 42` dargestellt.

Im Gegensatz zu dem in Figur 5 gezeigten Hydraulikschaltplan sind die erste Druckleitung 54, 54` und die zweite Druckleitung 54, 54` der beiden Hydraulikzylinder 42, 42` mit einem gemeinsamen Druckregelventil 56 verbunden und daher mittels eines vom Druckregelventil 56 vorgebbaren bzw. definierbaren Druck ansteuerbar und/oder beaufschlagbar. Aufgrund dessen sind beide Seiten der Hydraulikzylinder 42, 42` mit einem definierbaren Druck ansteuerbar, wobei die somit für die Erzeugung eines Schardrucks benötigte Kraft auf Basis der Flächendifferenz zwischen der Kolbenseite 44, 44` und der Ringseite 50, 50` erreicht wird. Diese Flächendifferenz ist in Abhängigkeit des jeweils verwendeten Zylinders festgelegt, so dass wiederum ein definierter Schardruck gesteuert und/oder geregelt werden kann.

Bei dem vorliegenden Hydraulikschaltplan gemäß Figur 5 ist es somit bspw. möglich, dass die Steuereinrichtung mit Drücken von bspw. 40 bar bis 100 bar betrieben werden kann, in welchem Druckbereich die vorhandene Ventiltechnik wesentlich preisgünstiger ist als in geringeren Druckbereichen.

Darüber hinaus sind beiden Hydraulikzylinder 42, 42` jeweils ein Ventil V₁, V₂ zugeordnet. Die Hydraulikzylinder 42, 42` sind jeweils insbesondere über die erste Druckleitung 52, 52` mit dem Ventil V verbunden. Da wie in Figur 4 jeder Hydraulikzylinder 42, 42` mit einem separaten Ventil V₁, V₂ verschaltet ist, ist folglich auch jeder Hydraulikzylinder 42, 42` und damit jedes Hack- und/oder Säschar 16 unabhängig voneinander ansteuerbar und somit zwischen einer ausgehobenen und einer abgesenkten Position verschwenkbar bzw. bewegbar.

Da gemäß der in den Figuren 4 und 5 gezeigten Hydraulikschaltpläne jedes Hack- und/oder Säschar 16, insbesondere jeder einzelner Hydraulikzylinder 42, 42` mittels der Ventile V₁, V₂ einzeln betätigt werden können, eignet sich ein solcher Hydraulikschaltplan insbesondere auch bei Section-Control-Anwendungen. D.h. Die Hack- und/oder Säschar 16 können unabhängig voneinander zwischen einer ausgehobenen und einer abgesenkten Position verschwenkt werden.

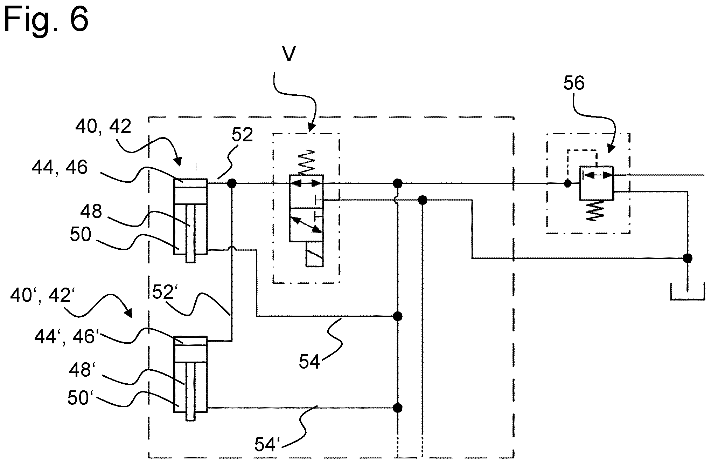

In der Figur 6 ist eine weitere Ausführungsform eines Hydraulikschaltplans zur Ansteuerung der Aktoren 40, 40`, insbesondere der Hydraulikzylinder 42, 42', dargestellt, wobei zur Steuerung der Aktoren 40 eine hier nicht dargestellte Steuereinrichtung vorgesehen ist. Aus Gründen der Übersichtlichkeit sind auch hier nur zwei Hydraulikzylinder 42, 42` abgebildet.

Der in Figur 6 gezeigte Hydraulikschaltplan entspricht grundsätzlich dem in Figur 5 gezeigten Hydraulikschaltplan, jedoch mit dem Unterschied, dass jeweils zumindest zwei Hydraulikzylinder 42, 42` und damit zumindest zwei Hack- und/oder Säschare 16 mittels eines gemeinsamen Ventils V gesteuert und/oder geregelt werden. D.h. die erste Druckleitung 52, 52` der beiden Hydraulikzylinder 42, 42` sind mit einem gemeinsamen Ventil V und mit einem gemeinsamen Druckregelventil 56 verbunden. Bei einer solchen Ausführungsform können zwar Kosten gespart werden, jedoch ist eine Einzelreihenschaltung der Hack- und/oder Säschare 16 nicht mehr möglich. Stattdessen können damit mehrere Hydraulikzylinder 42, 42` und somit Sektionen von Hack- und/oder Säscharen 16 gleichzeitig angesteuert werden.

Sofern zwei oder mehr Hydraulikzylinder 42, 42` mit dem Ventil V und dem Druckregelventil 56 angesteuert werden, kann das Ventil V mit einem der Hydraulikzylinder 42, 42` eine bauliche Einheit bilden. Alternativ kann das Ventil V auf einem Rahmen der Bodenbearbeitungsmaschine 10 montiert sein und mittels Verbindungsleitungen eine Verbindung zu dem Hack- und/oder Säschar 16 zugeordneten Zylinder herstellen.

Zur Erfassung des jeweiligen Schardrucks, kann bspw. die Steuereinrichtung mit einer entsprechenden (hier nicht dargestellten) Drucksensorik ausgestattet sein. Auch wäre es möglich, dass an zumindest einem Hack- und/oder Säschar 16 eine Sensorik zur Erfassung einer auf das Hack- und/oder Säschar 16 und/oder die Tiefenführungsrolle 18 wirkenden Kraft angebracht ist. Zudem kann vorgesehen sein, dass eine Ansteuerung, insbesondere Schardruckregelung in Abhängigkeit einer ermittelten Kraft automatisiert geregelt und/oder gesteuert wird. Zweckmäßig kann hierbei vorgesehen sein, dass eine Bedienperson lediglich einen Sollwert und/oder eine Solltiefe definieren muss und anschließend die Reglung automatisiert erfolgt.

Um die Anzahl an Verbindungsleitungen bzw. um die Anzahl an zwischen dem Rahmen der Bodenbearbeitungsmaschine 10 und den Hydraulikzylindern 42 benötigten Leitungen auf ein Minimum zu reduzieren, kann zudem vorgesehen sein, dass die Hydraulikzylinder 42 jeweils direkt miteinander verbunden sind, d.h. das jeweils eine Verbindungsleitung zwischen zwei Hack- und/oder Säscharen 16 bzw. zwischen den Hack- und/oder Säscharen 16 zugeordneten Hydraulikzylindern 42 vorgesehen ist und die Verbindungsleitungen nicht wieder zurück zum Rahmen der Bodenbearbeitungsmaschine 10 geführt werden müssen.

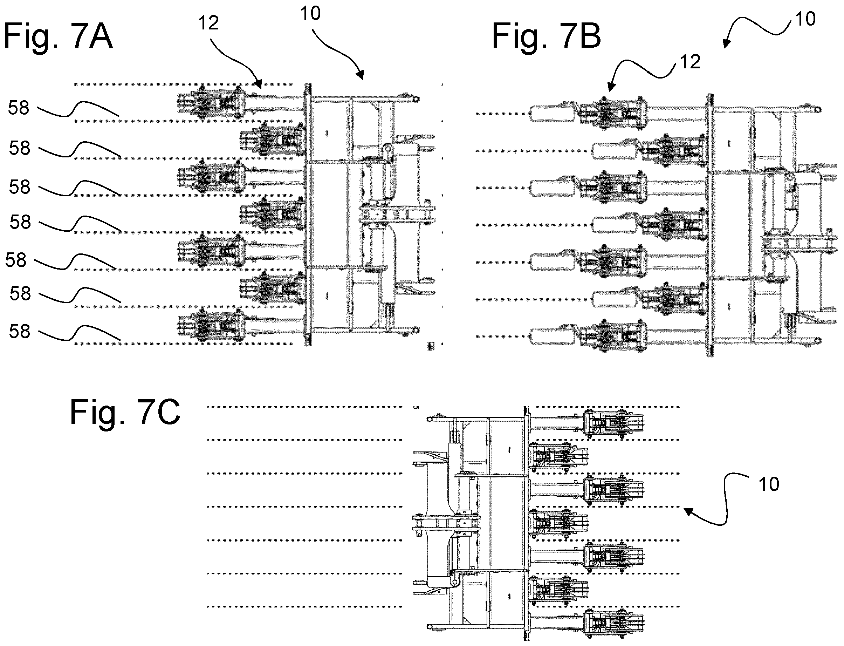

In den Figuren 7A, 7B und 7C geht die Funktions- und Wirkungsweise des Schienensystems 34 deutlich hervor, welches zwischen dem an der Bodenbearbeitungsmaschine 10 befestigten Aufhängungsrahmen 32 und der Viergelenk-Aufhängung 22 angeordnet ist. Mit Hilfe des Schienensystems 34 ist die Viergelenk-Aufhängung 22 mit dem daran gelagerten Scharrahmen 14 quer zur Arbeitsrichtung der Bodenbearbeitungsmaschine 10 verschiebbar, so dass die Hack- und/oder Säschare 16 in die jeweilige für die durchzuführenden Arbeiten benötige Position gebracht werden können.

Aus Figur 7A geht hervor, dass die Hack- und/oder Säschare 16 (hier jedoch nur Hackschare) mittels des Schienensystems 34 in eine Position zwischen zwei Saatreihen 58 gebracht wurden, wie des typischerweise bei der mechanischen Unkrautbekämpfung der Fall ist. D.h. die Hackschare 16 sind in Bezug auf die Saatreihen 58 in eine mittelsymmetrische Position gebracht, so dass exakt eine mechanische Unkrautbekämpfung zwischen den zweit Saatreihen erfolgen kann.

Das Hackschar 16 und die Tiefenführungsrolle 18 sind dabei gemäß Figur 3 ausgebildet, wonach die Tiefenführungsrolle 18 in Bezug auf eine Arbeitsrichtung der Bodenbearbeitungsmaschine 10 und der Bodenbearbeitungsvorrichtung 12 vor dem Hackschar 16 angeordnet ist.

In Figur 7B sind die Hack- und/oder Säschare 16 (hier nur Säschare) im Gegensatz zur Figur 7A mittels des Schienensystems 34 in eine für die Aussaat gewünschte Position gebracht und/oder verschoben worden, so dass das Saatgut mittels des Säschars 16 exakt in eine gewünschte Saatreihe abgelegt werden kann.

Das Hackschar 16 und die Tiefenführungsrolle 18 sind dabei gemäß den Figuren 2 ausgebildet, wonach die Tiefenführungsrolle 18 in Bezug auf eine Arbeitsrichtung der Bodenbearbeitungsmaschine 10 und der Bodenbearbeitungsvorrichtung 12 hinter dem Säschar 16 angeordnet ist.

Aus Figur 7C wird hingegen deutlich, dass die Hack- und/oder Säschare 16 mittels des Schienensystems 34 in eine sog. Offset-Position verschiebbar sind bzw. verschoben wurden. D.h. die Hack- und/oder Säschare 16 wurden bspw. um einen halben Strichabstand nach links oder rechts gegenüber einer mittelsymmetrischen Position verschoben. Der Offset kann somit derartig gewählt sein, dass die Hack- und/oder Säschare 16 in Abhängigkeit des Offsets im Wesentlichen exakt zwischen zwei Saatreihen bewegbar sind bzw. bewegt werden.

Mittels des Schienensystems 34 ist es auch möglich, dass die jeweilige Offset- und/oder mittelsymmetrische Position in Abhängigkeit der Arbeitsrichtung bzw. Fahrtrichtung der Bodenbearbeitungsmaschine 10 geändert werden kann bzw. veränderbar ist, so dass bspw. ein nahtloses Anschlussfahren erreicht werden kann. D.h., dass bspw. in eine Fahrrichtung ein linker Offset-Wert angefahren wird und in die entgegengesetzte Fahrrichtung ein rechter Offset-Wert angefahren wird.

Um variable Strichabstände zu erreichen, erfolgt eine Verbindung bzw. Montage zwischen dem Hack- und/oder Säschar 16 und dem Aufhängungsrahmen 32, insbesondere dem Schienensystem 34, mittels eines Klemmsystems, so dass das Hack- und/oder Säschar 16 an nahezu beliebigen Positionen am Rahmen, insbesondere am Aufhängungsrahmen 32, der Bodenbearbeitungsmaschine 10 montierbar ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Landwirtschaftliche Bodenbearbeitungsmaschine
12 Bodenbearbeitungsvorrichtung
14 Scharrahmen
16 Hack- und/oder Säschar
17 Stiel des Hack- und/oder Säschars
18 Tiefenführungsrolle
20 Halterung
22 Viergelenk-Aufhängung
23 Gelenkachsen
24 Lenker
26 Oberer Lenker
28 Unterer Lenker
30 Steckbolzen
32 Aufhängungsrahmen
34 Schienensystem
36 Schieberrahmen
38 Führungsrahmen
40 Aktor
40` Aktor
42 Hydraulikzylinder
42` Hydraulikzylinder
44 Kolbenseite
44` Kolbenseite
46 Kolbenraum
46` Kolbenraum
48 Kolbenstange
50 Ringseite
50` Ringseite
52 Erste Druckleitung
52` Erste Druckleitung
54 Zweite Druckleitung
54` Zweite Druckleitung
56 Druckregelventil
58 Saatreihe
V₁ Ventil

## Patentansprüche

1. An einem Trägerfahrzeug gelagerte oder montierbare Bodenbearbeitungsvorrichtung (12) für den landwirtschaftlichen Einsatz, umfassend zumindest einen am Trägerfahrzeug höhenverstellbar oder in definierter Höhe gelagerten Scharrahmen (14) mit einem Hack- und/oder Säschar (16), welcher Scharrahmen (14) eine Tiefenführungsrolle (18) trägt, die an einer Halterung (20) in definierter Höhe bezüglich des Hack- und/oder Säschars (16) oder höhenverstellbar zu diesem gelagert ist, **dadurch gekennzeichnet, dass** die Halterung (20) eine Anordnung der Tiefenführungsrolle (18) in Bezug auf eine Arbeitsrichtung des Trägerfahrzeuges und der Bodenbearbeitungsvorrichtung (12) vor dem Hack- und/oder Säschar (16) oder hinter dem Hack- und/oder Säschar (16) erlaubt.

2. Bodenbearbeitungsvorrichtung nach Anspruch 1, bei welcher der Scharrahmen (14) mitsamt dem daran befestigten Hack- und/oder Säschar (16) über eine beweglich am Trägerfahrzeug oder an einem dort angeordneten Zwischenträger gelagerte Viergelenk-Aufhängung (22) mit mindestens zwei in etwa parallel angeordneten, in Bezug auf die Arbeitsrichtung des Trägerfahrzeuges und der Bodenbearbeitungsvorrichtung (12) geschleppten Lenkern (24) höhenbeweglich gelagert ist.

3. Bodenbearbeitungsvorrichtung nach Anspruch 2, bei der die mindestens zwei geschleppten Lenker (24) in einer Arbeitsposition der Bodenbearbeitungsvorrichtung (12) einen Winkel zwischen etwa 10° und etwa 80° zu einer Horizontalen einschließen.

4. Bodenbearbeitungsvorrichtung nach einem der Ansprüche 1 bis 3, bei der die Tiefenführungsrolle (18) mittels Steckbolzen (30) an der Halterung (20) fixierbar und insbesondere werkzeuglos von dort entnehmbar und an dieser anbaubar ist.

5. Bodenbearbeitungsvorrichtung nach einem der Ansprüche 1 bis 4, bei der die Tiefenführungsrolle (18) in ihrer relativen Höhe zur Halterung und/oder zum Scharrahmen (14) des Hack- und/oder Säschars (16) justierbar und in dieser eingestellten Höhe festlegbar ist.

6. Landwirtschaftliche Bodenbearbeitungsmaschine (10) zur insbesondere höhenverstellbaren Montage an einem Trägerfahrzeug, welche Bodenbearbeitungsmaschine (10) mindestens zwei voneinander beabstandete Bodenbearbeitungsvorrichtungen (12) gemäß einem der Ansprüche 1 bis 5 aufweist, die an einem höhenverstellbar oder in definierter Höhe an einem Trägerfahrzeug befindlichen Aufhängungsrahmen (32) befestigt sind.

7. Landwirtschaftliche Bodenbearbeitungsmaschine (10) nach Anspruch 6, bei der zwischen dem am Trägerfahrzeug befestigten Aufhängungsrahmen (32) und der Viergelenk-Aufhängung (22) ein Schienensystem (34) angeordnet ist, mit dessen Hilfe die Viergelenk-Aufhängung (22) mit dem daran gelagerten Scharrahmen (14) quer zur Arbeitsrichtung des Trägerfahrzeuges verschiebbar ist.

8. Landwirtschaftliche Bodenbearbeitungsmaschine (10) nach Anspruch 7, bei der die mindestens zwei voneinander beabstandeten Bodenbearbeitungsvorrichtungen (12) gemeinsam an dem gegenüber dem Aufhängungsrahmen (32) quer zur Arbeitsrichtung des Trägerfahrzeuges verschiebbaren Schienensystem (34) befestigt sind.

9. Landwirtschaftliche Bodenbearbeitungsmaschine nach Anspruch 7 oder 8, bei der die mindestens zwei Bodenbearbeitungsvorrichtungen (12) jeweils an verschiedenen Positionen am quer zur Arbeitsrichtung des Trägerfahrzeuges verstellbaren Schienensystem (34) montierbar sind, insbesondere entlang der Längserstreckungsrichtung des Schienensystems (34) und/oder quer zur Arbeitsrichtung des Trägerfahrzeuges.

## Claims

1. A soil cultivation device (12) for agricultural use, which soil cultivation device (12) is mounted or mountable on a carrier vehicle, the soil cultivation device (12) comprising at least one coulter frame (14) with a hoeing coulter and/or sowing coulter (16) mounted in a height-adjustable manner or at a defined height on the carrier vehicle, which coulter frame (14) carries a depth control roller (18), which is mounted on a mount (20) at a defined height relative to the hoeing coulter and/or sowing coulter (16) or in a height-adjustable manner relative thereto,
**characterised in that** the mount (20) allows an arrangement of the depth control roller (18) in front of the hoeing coulter and/or sowing coulter (16) or behind the hoeing coulter and/or sowing coulter (16) in relation to a work direction of the carrier vehicle and the soil cultivation device (12).

2. The soil cultivation device according to claim 1, in which the coulter frame (14) is mounted, together with the hoeing coulter and/or sowing coulter (16) attached thereto, in a height-movable manner via a four-bar linkage suspension (22) with at least two steering links (24) arranged approximately parallel and dragged in relation to the work direction of the carrier vehicle and the soil cultivation device (12), the four-bar linkage suspension (22) being movably mounted on the carrier vehicle or on an intermediate carrier arranged there.

3. The soil cultivation device according to claim 2, in which the at least two dragged steering links (24) enclose an angle of between about 10° and about 80° to a horizontal in a work position of the soil cultivation device (12).

4. The soil cultivation device according to one of the claims 1 to 3, in which the depth control roller (18) is fixable to the mount (20) by means of hitch bolts (30) and, in particular, is removable from and mountable on the mount (20) without tools.

5. The soil cultivation device according to one of the claims 1 to 4, in which the depth control roller (18) is adjustable in its height relative to the mount and/or to the coulter frame (14) of the hoeing coulter and/or sowing coulter (16) and is fixable at this adjusted height.

6. An agricultural soil cultivation machine (10) to be mounted on a carrier vehicle, in particular, in a height-adjustable manner, which soil cultivation machine (10) has at least two soil cultivation devices (12) according to one of the claims 1 to 5, which soil cultivation devices (12) are spaced apart from each other and are attached to a suspension frame (32) located on a carrier vehicle in a height-adjustable manner or at a defined height.

7. The agricultural soil cultivation machine (10) according to claim 6, in which a rail system (34) is arranged between the suspension frame (32) attached to the carrier vehicle and the four-bar linkage suspension (22), by means of which rail system (34) the four-bar linkage suspension (22) with the coulter frame (14) mounted thereon is shiftable transversely to the work direction of the carrier vehicle.

8. The agricultural soil cultivation machine (10) according to claim 7, in which the at least two soil cultivation devices (12) that are spaced apart from each other are together attached to the rail system (34), which is shiftable relative to the suspension frame (32) transversely to the work direction of the carrier vehicle.

9. The agricultural soil cultivation machine according to claim 7 or 8, in which the at least two soil cultivation devices (12) are each mountable in different positions on the rail system (34) which is adjustable transversely to the work direction of the carrier vehicle, in particular, along the longitudinal extension direction of the rail system (34) and/or transversely to the work direction of the carrier vehicle.

## Revendications

1. Dispositif de travail du sol (12) pour utilisation agricole, disposé ou pouvant être monté sur un véhicule porteur, comprenant au moins un châssis de soc (14) disposé sur le véhicule porteur de manière réglable en hauteur ou à une hauteur définie, muni d'un soc de binage et/ou de semeur (16), lequel châssis de soc (14) porte un rouleau de guidage en profondeur (18) qui est disposé sur un support (20) à une hauteur définie quant au soc de binage et/ou de semeur (16) ou de manière réglable en hauteur par rapport à celui-ci,
**caractérisé en ce que** le support (20) permet une disposition du rouleau de guidage en profondeur (18) par rapport à un sens de travail du véhicule porteur et du dispositif de travail du sol (12) devant le soc de binage et/ou de semeur (16) ou derrière le soc de binage et/ou de semeur (16).

2. Dispositif de travail du sol selon la revendication 1, dans lequel le châssis de soc (14) y compris le soc de binage et/ou de semeur (16) qui y est fixé, est disposé mobile en hauteur par l'intermédiaire d'une suspension à quatre articulations (22) disposée mobile sur le véhicule porteur ou sur un support intermédiaire agencé sur celui-ci, avec au moins deux bras (24) agencés à peu près parallèlement et tractés par rapport au sens de travail du véhicule porteur et du dispositif de travail du sol (12).

3. Dispositif de travail du sol selon la revendication 2, dans lequel lesdits au moins deux bras tractés (24) forment, dans une position de travail du dispositif de travail du sol (12), un angle compris entre environ 10° et environ 80° par rapport à une horizontale.

4. Dispositif de travail du sol selon l'une quelconque des revendications 1 à 3, dans lequel le rouleau de guidage en profondeur (18) peut être fixé au support (20) au moyen de boulons enfichables (30) et peut notamment être retiré de ce support et y être monté sans l'aide d'outil.

5. Dispositif de travail du sol selon l'une quelconque des revendications 1 à 4, dans lequel le rouleau de guidage en profondeur (18) peut être ajusté dans sa hauteur relative par rapport au support et/ou au châssis de soc (14) du soc de binage et/ou de semeur (16), et peut être fixé à cette hauteur ajustée.

6. Machine agricole de travail du sol (10) destinée à être montée sur un véhicule porteur, notamment de manière réglable en hauteur, laquelle machine de travail du sol (10) comporte au moins deux dispositifs de travail du sol (12) espacés l'un de l'autre selon l'une quelconque des revendications 1 à 5, et qui sont fixés à un châssis de suspension (32) réglable en hauteur ou situé à une hauteur définie sur un véhicule porteur.

7. Machine agricole de travail du sol (10) selon la revendication 6, dans laquelle un système de rails (34) est disposé entre le châssis de suspension (32) fixé au véhicule porteur et la suspension à quatre articulations (22), à l'aide duquel la suspension à quatre articulations (22) peut être déplacée avec le châssis de soc (14) disposé sur elle transversalement au sens de travail du véhicule porteur.

8. Machine agricole de travail du sol (10) selon la revendication 7, dans laquelle lesdits au moins deux dispositifs de travail du sol (12) espacés l'un de l'autre sont fixés ensemble au système de rails (34) qui peut être déplacé par rapport au châssis de suspension (32) transversalement au sens de travail du véhicule porteur.

9. Machine agricole de travail du sol selon la revendication 7 ou 8, dans laquelle lesdits au moins deux dispositifs de travail du sol (12) peuvent être montés respectivement dans des positions différentes sur le système de rail (34) réglable transversalement au sens de travail du véhicule porteur, notamment le long du sens d'extension longitudinale du système de rails (34) et/ou transversalement au sens de travail du véhicule porteur.
